# EUROPEAN PATENT SPECIFICATION

(11) **EP 2 785 770 B1**
(45) Date of publication and mention of the grant of the patent: **30.09.2015**
(21) Application number: 12813470.7
(22) Date of filing: 15.11.2012
(51) Int. Cl.: C08J 3/205, C08J 7/04, C08L 9/02

(54) **NEW COATED ELASTOMERS AND PROCESSES FOR THEIR PREPARATION**
NEUE BESCHICHTETE ELASTOMERE UND VERFAHREN ZU IHRER HERSTELLUNG
NOUVEAUX ÉLASTOMÈRES REVÊTUS ET LEURS PROCÉDÉS DE PRÉPARATION

(30) Priority: 02.12.2011 IT RM20110643
(43) Date of publication of application: 08.10.2014
(73) Proprietor: Unilab S.A.S. di Lavagna Silvio Massimo&C., 00189 Roma - RM (IT); L'Isolante K-Flex S.p.A., 20877 Roncello - MB (IT)
(72) Inventor: LAVAGNA, Silvio Massimo, I-00186 Rome - RM (IT)
(74) Representative: Germinario, Claudio
(86) International application number: PCT/IB2012/056451
(87) International publication number: WO 2013/080081

(56) References cited:
- WO-A2-2010/124130
- GB-A- 1 348 801
- US-A1- 2004 068 036

## Description

The present invention refers to elastomers with a coating of polyvinyl alcohol and to the processes for their preparation. The present invention further refers to the use of films of polyvinyl alcohol for the protection of elastomers from degradation caused by exposure to UV rays.

### STATE OF THE PRIOR ART

Elastomeric polymers, or more commonly elastomers, due to their ability to undergo great elastic deformations are commonly used as coating of raceways, conduits, tanks, etc. In particular, elastomers find wide use in the coating of raceways and conduits where hot or cold fluids flow, like, e.g., the conduits of piping systems of large areas, such as industrial installations, shopping centers, airports, oil rigs, etc. For all these specific applications, preferably elastomers are used which, besides elastic properties, also have insulating properties, in particular in the closed-cell foam sheet form so as to reduce heat exchange with the external environment.

Some of the elastomers with insulating properties, much used for this specific application, are elastomers based on acrylonitrile-butadiene (NBR), and elastomers based on a blend of NBR/PVC. The products defined as NBR-PVC are homogeneous blends comprised of an acrylonitrile-butadiene copolymer blended with polyvinyl chloride (PVC). NBR-PVC compounds are recommended for all those applications requiring a good resistance to atmospheric agents, to organic liquids, like aliphatic oils, and to nonpolar solvents. The main advantage of these NBR-PVC compounds with respect to traditional nitrile rubbers is their exceptional resistance to ozone. A higher content of PVC in the NBR-PVC blend improves resistance to atmospheric agents. These NBR-PVC compounds generally have respectively a 60/40 or 70/30 ratio between them, with a % content of base acrylonitrile polymer in the range between 18% and 50% and a Mooney Viscosity (ML1 +4, 100°C) in the range 48-85.
Moreover, for these NBR-PVC compounds there are further applications in the use of seals of various types.
It was observed that this type of elastomers, following a prolonged exposure to UV rays, undergo a degradation making them not suitable anymore to the uses indicated above. In order to allow a suitable protective coating to be preserved over time it is therefore necessary to replace degraded elastomers with new ones, thereby causing high maintenance costs.

### SUMMARY OF THE INVENTION

Object of the present invention is to provide new elastomers based on NBR or on NBR/PVC blends with a coating suitable for being protected from degradation caused by a prolonged exposure to UV rays.

The Inventor has surprisingly discovered that by coating the elastomers based on NBR or on NBR/PVC blends with a film of polyvinyl alcohol, the elastomers are protected from degradation due to UV rays for a time of over 19 months.

Therefore, object of the present invention are:
A process for the preparation of an elastomer comprising NBR coated with a film of polyvinyl alcohol comprising the following steps:
   a) preparing an aqueous solution of polyvinyl alcohol in the range between 2% and 20% w/w.
   b) depositing said solution on said elastomer;
   c) drying said solution deposited on said elastomer in such a way as to obtain a film of polyvinyl alcohol.

Elastomers comprising NBR coated with a film of polyvinyl alcohol obtainable according to the process of the present invention, characterized by a resistance to UV aging over 19 months.

Elastomers comprising NBR coated with a film of polyvinyl alcohol.

Use of polyvinyl alcohol films for the protection of an elastomer comprising NBR from UV rays.

The products obtainable according to the process of the present invention find application in the civil and industrial fields, e.g. as insulating material in cooling systems, in conditioning systems, in hot pipings and for drains, in tanks, pipings and valves, and in water pipes. The advantages, features and the operation modes of the present invention will be made apparent in the following detailed description of some embodiments thereof, given by way of example and not for limiting purposes.

### DETAILED DESCRIPTION OF THE FIGURES

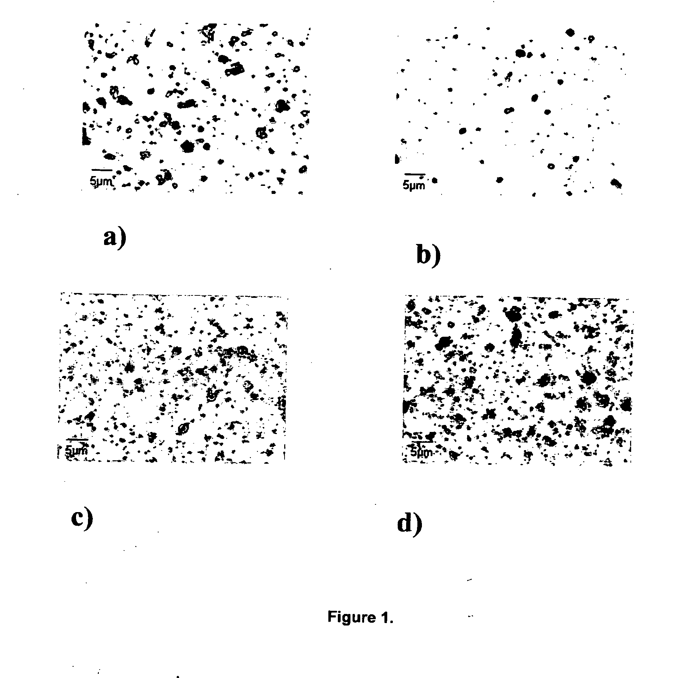

Figure 1. Some of the films (PVA films) obtained as described in the examples were observed under optical microscope, and hereinafter the images for some of the samples observed are reported: (A) 2.5% PVA, 2% TiO, no ultrasonic (US) treatment, (B) 2.5% PVA, 2% TiO₂, US treatment, (C) 5% PVA, 1% TiO₂, US treatment, (D) 5% PVA, 1 % TiO₂, no US treatment.

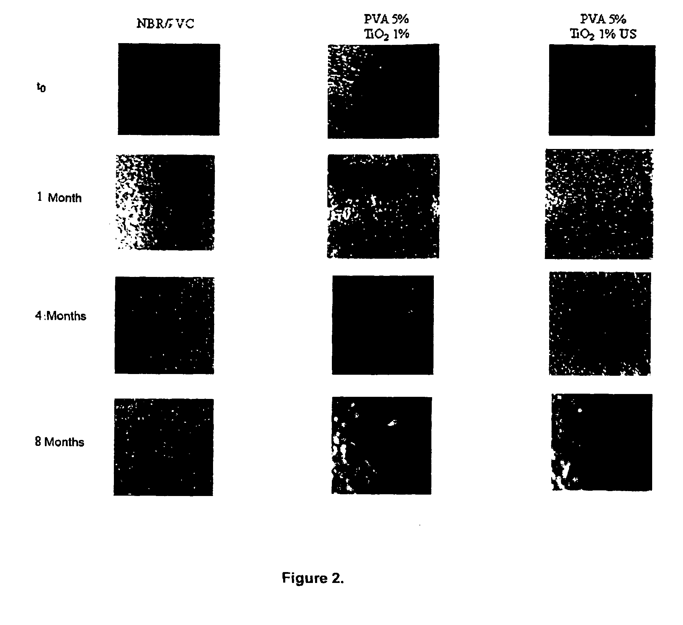

Figure 2. Photos of some of the samples prepared as reported in the examples are reproduced, at different aging times. From the images, a remarkable change is observed in the sample without coating: passing from 0 to 8 months of exposure the sample without coating has cracking, whose frequency increases over time. Instead, in samples coated with the (PVA) film, no significant alteration is present.

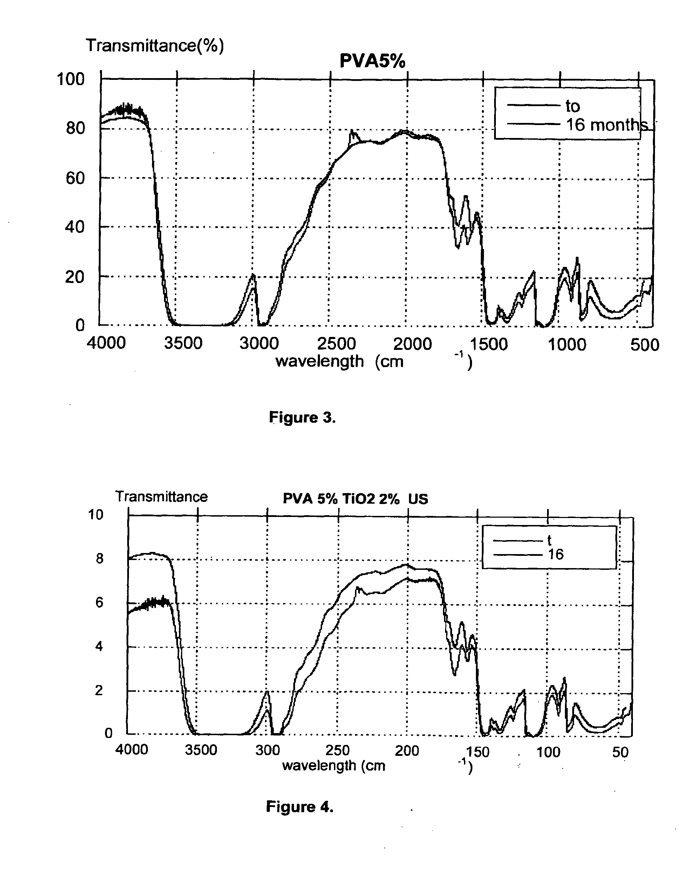

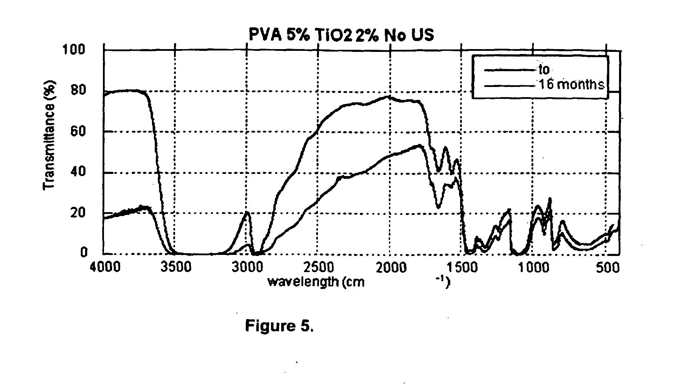

Figures 3, 4 and 5: Infrared (IR) spectra of the films of some of the samples obtained according to the process of the invention before and after a 16-month UV-ray aging treatment. For simplicity's sake, spectra of samples at the beginning and at the end of the treatment were reported. It is to be pointed out that the characteristic peaks of PVA are all present even after 16 months of UV aging. Said data were further confirmed with (H) NMR spectra.

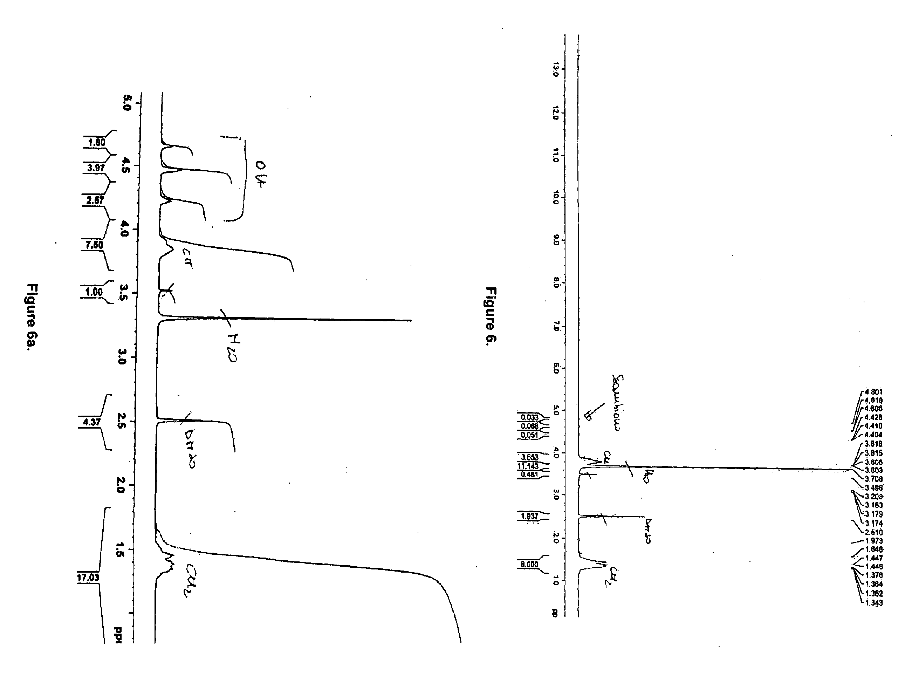

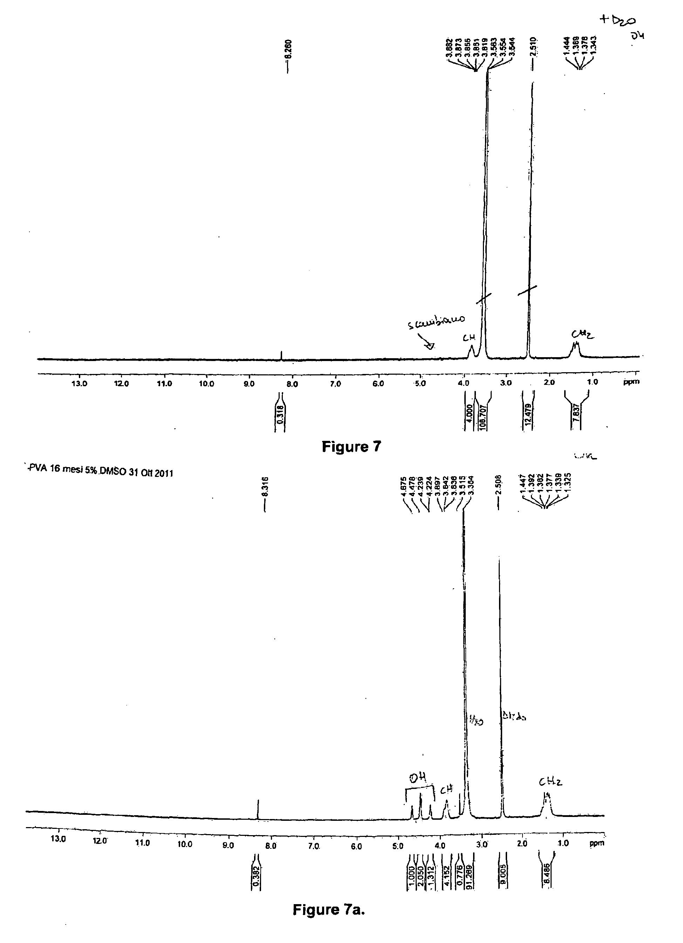

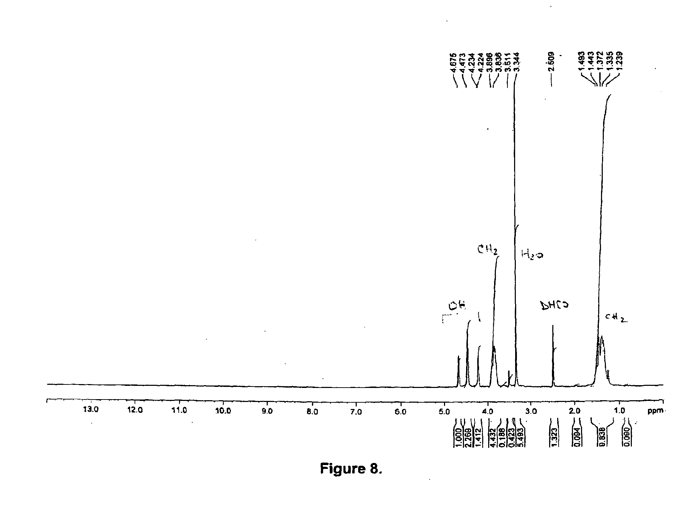

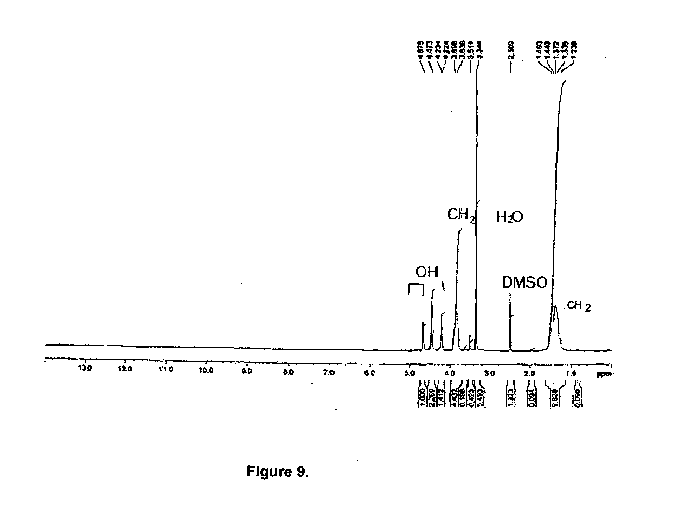

Figures 6, 6a, 7, 7a, 8 and 9: (H) NMR spectra of polyvinyl alcohol films of some of the samples obtained according to the process of the invention, before (Figs. 6 and 6a) and after the 16-month UV aging treatment (Figs. 7, 7a, 8 and 9).

### DETAILED DESCRIPTION OF THE INVENTION

The process object of the invention comprises the various steps; hereinafter, the possible embodiments for each of them will be described in further detail.

The first step a) provides preparing an aqueous solution of polyvinyl alcohol (PVA) in the range between 2% and 20% w/w. Said aqueous solution could be purchased or prepared by dissolving polyvinyl alcohol in an aqueous solution. The polyvinyl alcohol could also be dissolved in other types of suitable solutions, like e.g. in dimethyl sulfoxide, and then diluted in an aqueous solution.

Polyvinyl alcohol is a biocompatible, low-cost synthetic polymer, whose structural formula is reported below:

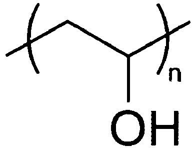

Polyvinyl alcohol is dissolved so that the final concentration be in the range between 2% and 20% w/w, preferably between 5% and 10% w/w. The Inventor discovered that these ranges are optimal to obtain a film of polyvinyl alcohol that, beside protecting elastomers from UV rays, have a mechanical strength and concomitantly an elasticity such that the elastomers thus coated can be used efficiently as coating and insulation in the aforedescribed applications. In the present description, the term "% w/w" means the percent composition of the solution expressed as grams of solute per 100 g of solution weight.

In an embodiment of the invention, to promote dissolution, the polyvinyl alcohol is dissolved in solution by stirring and/or heating of the solution, e.g. by stirring at a temperature higher than 50°C, preferably in the range between 60-80°C.

In a preferred embodiment the aqueous solution of polyvinyl alcohol is mixed with a solution of nanoparticles, for instance with a mean diameter of 100nm. The nanoparticles are preferably of titanium dioxide or zinc oxide, to a final concentration of said nanoparticles in the range between 0.5% and 5% w/w, preferably between 1% and 4% w/w, more preferably between 2 and 3% w/w. The Author of the present invention discovered that adding nanoparticles of titanium dioxide to the solution of polyvinyl alcohol allows to obtain a film that gives to the product, obtainable from the process, features of scattering and resistance to UV radiation, making said product suitable as insulator in all the above-mentioned applications. Analyses reported in the experiments show that the addition of nanoparticles of titanium dioxide in polyvinyl alcohol films increases elastomers protection from UV rays. Moreover, the selection of titanium dioxide entails further advantages, such as the low cost, its antibacterial properties and the ability to eliminate toxic substances from the environment.

It has to be considered how, given the very recent appearance of nanotechnologies, and given the literature concerning it, still scarce in comparison with the "non-nanotech" literature, to date it is absolutely not foreseeable what the effect may be, and whether there may be a tangible effect, of the use of nanoparticles in the development of various products.

Therefore, it was not at all foreseeable that, with the addition of Titanium particles, it would have been possible to obtain an improvement of the product.

In the present description, with the term "Nanoparticles" (NPs) are defined particles characterized by having at least one of the three dimensions of the nanometric order. The term "solution of nanoparticles", to the ends of the present description and for a clear interpretation of the claims, means a solution in which the nanoparticles contained therein have no forms of aggregation causing them to exit the size of what commonly defined in the literature as "nano", i.e. that any aggregates present therefore maintain a size smaller than the micron, and therefore be anyhow definable as "nanoparticles". Prior to step b) of the process, the aqueous solution of polyvinyl alcohol could be advantageously treated with ultrasounds. The treatment with ultrasounds entails various advantages, as it causes a better dispersion of nanoparticles in solution and the elimination of air from the solution, enabling to obtain films more uniform and with improved mechanical properties.

The solution could, e.g., be treated for a time in the range between 20 and 60 seconds at a frequency between 20 and 50 KHz. On the basis of the present description and of the amount of solution to be used, the technician in the field could, without inventive activity, determine the time and frequency suitable for the ultrasonic treatment.

Once the solution at step a) has been prepared according to any one of the above-described embodiments, it is carried out the second step b), consisting in depositing the solution on an elastomer comprising NBR and/or blends of NBR/PVC, like e.g. NITRIFLEX elastomers marketed by K-flex, obtained starting from NBR (copolymers of acrylonitrile-butadiene with trade name Europrene N, Standard and Green types) including those with an ACN content equal to 28% and PVC K-57 in ratios of about 60/40, of the NBR/PVC series referred to as "OZO" (Enichem), for the greater resistance to ozone of the blend gelled at 170°C with respect to the sole NBR, and using in the blend a PVC copolymer of vinyl chloride and vinyl acetate base. Such elastomers are produced by Kflex with the following denominations: N-6420, N-7220, N7410, N.7411, N-7420, N-7420P, N-7920, PDC-7421 e PDC-7423.

The solution could be deposited so as to coat all or part of the elastomer: e.g., it could be deposited so as to cover only the part of the elastomer which will be exposed to UV radiations.

Once the solution has been deposited on the elastomer, one proceeds with the third step c), consisting in producing the coating film by solvent evaporation. This step may be carried out, in a non-limiting way, e.g. by drying in a ventilated oven until obtaining films with a thickness of the order of mm. The drying stage could be carried out, e.g., in a ventilated oven, at a temperature comprised between 50°-70°C for a time of 0.5-2 hours.

Object of the present invention are elastomers comprising NBR coated with polyvinyl alcohol obtainable according to the process in accordance with any one of the above-described embodiments.

The elastomers obtained with the process of the invention were analyzed by various techniques, as described in the examples. By these analyses the properties of obtained products were evaluated, in particular, an UV-ray aging test was carried out, following Standards ASTM G154. The results show that uncoated NBR-based elastomers subjected to an UV-ray aging process are degraded, in particular after a time period of 16 months of treatment the elastomers show evident and significant alterations (cracks) with respect to the initial stage. To the touch they release a black powder, index of a brittleness onset after UVA irradiation. On the contrary, the elastomers obtained with the process of the present invention show no degradation even after an aging period greater than 19 months. Absence of degradation of the products of the present invention is also confirmed by analysis of film spectra obtained by means of infrared spectrophotometry before and after the aging treatment.

Object of the present invention are also elastomers comprising NBR coated with a film of polyvinyl alcohol. Preferably, the films will comprise nanoparticles of titanium dioxide. The particles could be homogenously dispersed at different concentrations w/w, like e.g. 0.5%, 1%, 2%, 3%, 4% , 5%. The film coating could be total or partial, i.e. coating completely the external surface of the elastomer, or part thereof. E.g., it could coat only the portion of elastomer surface which is exposed to UV rays. The films used could be of different thickness and mechanical elasticity, provided that they be suitable to be used as elastomer coating.

Therefore, object of the present invention is also the use of polyvinyl alcohol films for the protection from UV rays of an elastomer comprising NBR or NBR-PVC mixtures. The films used could be as described above, e.g. comprise homogeneously dispersed nanoparticles of titanium dioxide and have different thicknesses suitable to give a resistance to UV radiations.

In the present description, the term "elastomer comprising NBR" means any one elastomer based on NBR or on blends of NBR with other polymers like, e.g., PVC. For instance, NBR-PVC are blended in some elastomers, respectively in a 60/40 or 70/30 ratio. Examples of elastomers suitable for the present invention are the NITRIFLEX elastomers marketed by K-flex: N-6420, N-7220, N7410, N.7411, N-7420, N-7420P, N-7920, PDC-7421 and PDC-7423.

### EXAMPLES

The present description will now be further illustrated by the following examples, yet in no way will it be limited thereto.

### EXAMPLE 1 Preparation of elastomers coated with polyvinyl alcohol

### Materials.

Elastomer marketed by K-Flex ST NITRIFLEX (elastomer based on blends of NBR/PVC), Polyvinyl alcohol (PVA, M_{w} =40 KDa, available from Sigma), titanium dioxide (TiO₂, available from Sigma). The solvent used was Milli-Q water.

### Preparing and depositing the polymeric solution on the elastomers.

Aqueous solutions of PVA and TiO₂ at different concentration were prepared. By way of example, one of the formulates used is reported. 0.250 g PVA were placed in a Becker to which 5 ml of distilled water were added. The system was heated to T= 80°C in order to foster polymer dissolution. Subsequently, 2.5 mg TiO₂ suspended in 200 µl water were added to the PVA solution at room temperature. The solution was kept under stirring for 12 hours. 2,5 ml of the solution were ultrasonicated for 30 s in a Sonica-type ultrasonic bath with a 45 KHz-frequency and a continuous peak power HF equal to 360. 1 ml of the solution thus obtained was deposited on a sample of elastomer K-Flex (of a size of about 5 cm x 3 cm) and by slow evaporation of the water the coating of the material was obtained.

### EXAMPLE 2 Preparation of coated elastomers with Polyvinyl alcohol at different concentrations.

By using the materials and following the procedure of Example 1, elastomers were prepared starting from solutions of polyvinyl alcohol at different concentrations (2.5%, 5% and 10%, 20% w/w), with and without titanium dioxide at different concentrations (1%, 2% and 4%) and with or without ultrasonic treatment.

### EXAMPLE 3

### Physical aging of samples.

Samples prepared as reported in the preceding examples and samples without PVA coating were subjected to aging with QUV Accelerated Weathering Tester apparatus, conforming to Standard ASTM G154. The samples were irradiated with 8 UVA lamps (I=120 cm, irradiance 0.78W/m²/nm, λ=340 nm) at a constant temperature of 45°C, for a number of hours corresponding to about 1, 4, 8, 12, 16 and 19 months.

### Microscopy, IR spectroscopy and (H) NMR

The solutions used for the *coating* of the elastomers were also deposited on laboratory glass slides. After water evaporation, the film formed was observed under microscope and, analogously to what done for the elastomer samples, were subjected to aging. Periodic measurements of IR spectroscopy and (H) NMR were conducted on films prepared.

### Results

From an overall analysis of the samples subjected to the aging treatment, it was highlighted that the K-flex elastomer of NBR/PVC type (reference *tel quel* sample) after 16 months of treatment shows evident and significant alterations (cracks) with respect to the initial stage. To the touch it releases a black powder, index of a brittleness onset following UVA irradiation.

The elastomers coated with films of polyvinyl alcohol undergo no degradation even after 19 months of aging (in the figures, only data of up to 16 months are shown); in fact, no cracks are present on the part directly exposed to UVA rays. To the touch, the elastomer part coated with the polymeric film releases no pulverulent material. The other parts of the same sample, not coated with polyvinyl alcohol, crumble when rubbed, thereby showing that only where the coating is present a degradation of the material is not observed.

Among investigated PVA concentrations, that with 5% PVA appears to be optimal. By analyzing the NBR/PVC 2.5% PVA, NBR/PVC 5% PVA and NBR/PVC 10% PVA samples, it is evident that the polymeric layer present on the elastomer and deriving from the 5% solution proves to be resistant and intact. In the case of the film from the NBR/PVC 2.5% PVA sample, the film layer is too thin, and therefore more labile. As to the NBR/PVC 10% PVA sample, the material has a rigidity which makes the elastomer sample less flexible. The (H) NMR spectra show that TiO₂ addition causes a greater UV protection of elastomers.

The use of ultrasounds in the step of preparing the PVA/TiO₂ solution causes an improved dispersion of the nanoparticles in the polymeric stage, as shown in Figure 1. The results obtained with the different starting compositions are resumed in Table 1.

## Claims

1. A process for the preparation of an elastomer comprising NBR coated with a film of polyvinyl alcohol comprising the following steps:
a) preparing an aqueous solution of polyvinyl alcohol in the range between 2% and 20% w/w;
b) depositing said solution on said elastomer;
c) drying said solution deposited on said elastomer in such a way as to obtain a film of polyvinyl alcohol on said elastomer.

2. The process according to claim 1 wherein the aqueous solution prepared in step a) is mixed with a solution of nanoparticles of titanium dioxide or zinc oxide to a final concentration of said nanoparticles in the range between 0.5% and 5% w/w.

3. The process according to claims 1 or 2 wherein said aqueous solution before being deposited is subjected to an ultrasonic treatment.

4. The process according to any one of claims 1-3 wherein said elastomer is an elastomer comprising a blend of NBR/PVC.

5. An elastomer comprising NBR coated with polyvinyl alcohol obtainable according to the process of any one of claims 1-4 **characterized by** a resistance to UV aging over 19 months.

6. An elastomer comprising NBR coated with a film of polyvinyl alcohol.

7. The elastomer according to claim 6 wherein said film of polyvinyl alcohol comprises nanoparticles of titanium dioxide or zinc oxide.

8. The elastomer according to claim 6 or 7 wherein said elastomer is an elastomer comprising a blend of NBR/PVC.

9. Use of polyvinyl alcohol films for the protection of an elastomer comprising NBR from UV rays.

10. The use according to claim 9 wherein said film comprises nanoparticles of titanium dioxide or zinc oxide.

## Patentansprüche

1. Ein Verfahren zur Herstellung eines NBR enthaltenden Elastomers, das mit einem Film aus Polyvinylalkohol beschichtet ist, umfassend die folgenden Schritte:
a) Herstellen einer wässrigen Lösung von Polyvinylalkohol im Bereich zwischen 2% und 20% Gew./Gew.;
b) Auftragen der Lösung auf das Elastomer;
c) Trocknen der Lösung, die auf das Elastomer aufgetragen ist, derart, dass ein Film aus Polyvinylalkohol auf dem Elastomer erhalten wird.

2. Das Verfahren gemäß Anspruch 1, wobei die in Schritt a) hergestellte wässrige Lösung mit einer Lösung von Nanopartikeln aus Titandioxid oder Zinkoxid zu einer Endkonzentration der Nanopartikel im Bereich zwischen 0,5% und 5% Gew./Gew. gemischt wird.

3. Das Verfahren gemäß den Ansprüchen 1 oder 2, wobei die wässrige Lösung einer Ultraschallbehandlung unterzogen wird, bevor sie aufgetragen wird.

4. Das Verfahren gemäß einem der Ansprüche 1 bis 3, wobei das Elastomer ein Elastomer ist, das ein Gemisch aus NBR/PVC umfasst.

5. Ein NBR enthaltendes Elastomer, das mit Polyvinylalkohol beschichtet ist, erhältlich gemäß dem Verfahren von einem der Ansprüche 1 bis 4, **gekennzeichnet durch** eine Beständigkeit gegen UV-Alterung über 19 Monate.

6. Ein NBR enthaltendes Elastomer, das mit einem Film aus Polyvinylalkohol beschichtet ist.

7. Das Elastomer gemäß Anspruch 6, wobei der Film aus Polyvinylalkohol Nanopartikel aus Titandioxid oder Zinkoxid umfasst.

8. Das Elastomer gemäß Anspruch 6 oder 7, wobei das Elastomer ein Elastomer ist, das ein Gemisch aus NBR/PVC umfasst.

9. Verwendung von Polyvinylalkoholfilmen zum Schutz eines Elastomers, umfassend NBR, vor UV-Strahlen.

10. Die Verwendung gemäß Anspruch 9, wobei der Film Nanopartikel aus Titandioxid oder Zinkoxid umfasst.

## Revendications

1. Procédé de préparation d'un élastomère comprenant du NBR revêtu d'un film à base d'alcool polyvinylique comprenant les étapes suivantes :
a) la préparation d'une solution aqueuse d'alcool polyvinylique dans la plage comprise entre 2 et 20 % p/p ;
b) le dépôt de ladite solution sur ledit élastomère ;
c) le séchage de ladite solution déposée sur ledit élastomère de façon à obtenir un film d'alcool polyvinylique sur ledit élastomère.

2. Procédé selon la revendication 1 dans lequel la solution aqueuse préparée à l'étape a) est mélangée à une solution de nanoparticules de dioxyde de titane ou d'oxyde de zinc jusqu'à une concentration finale desdites nanoparticules dans la plage comprise entre 0,5 à 5 % p/p.

3. Procédé selon les revendications 1 ou 2 dans lequel ladite solution aqueuse est soumise à un traitement par ultrasons avant d'être déposée.

4. Procédé selon l'une quelconque des revendications 1 à 3 dans lequel ledit élastomère est un élastomère comprenant un mélange de NBR/PVC.

5. Elastomère comprenant du NBR revêtu d'alcool polyvinylique pouvant être obtenu par le procédé selon l'une quelconque des revendications 1 à 4 **caractérisé par** une résistance au vieillissement par UV supérieure à 19 mois.

6. Elastomère comprenant du NBR revêtu d'un film d'alcool polyvinylique.

7. Elastomère selon la revendication 6 dans lequel ledit film d'alcool polyvinylique comprend des nanoparticules de dioxyde de titane ou d'oxyde de zinc.

8. Elastomère selon la revendication 6 ou 7 dans lequel ledit élastomère est un élastomère comprenant un mélange de NBR/PVC.

9. Utilisation de films d'alcool polyvinylique pour la protection d'un élastomère comprenant du NBR contre les rayons UV.

10. Utilisation selon la revendication 9 dans laquelle ledit film comprend des nanoparticules de dioxyde de titane ou d'oxyde de zinc.
